(19) Europäisches Patentamt
European Patent Office
Office européen des brevets

(11) Numéro de publication : **0 488 845 B1**

(12) **FASCICULE DE BREVET EUROPEEN**

(45) Date de publication du fascicule du brevet :
02.03.94 Bulletin 94/09

(51) Int. Cl.⁵ : **B64C 27/00**

(21) Numéro de dépôt : **91403033.3**

(22) Date de dépôt : **12.11.91**

(54) **Dispositif de suspension anti-résonnante pour hélicoptère.**

(30) Priorité : **30.11.90 FR 9015036**

(43) Date de publication de la demande :
**03.06.92 Bulletin 92/23**

(45) Mention de la délivrance du brevet :
**02.03.94 Bulletin 94/09**

(84) Etats contractants désignés :
**DE GB IT**

(56) Documents cités :
**EP-A- 0 034 092**
**EP-A- 0 058 117**

(73) Titulaire : **AEROSPATIALE Société Nationale Industrielle**
**37, Boulevard de Montmorency**
**F-75781 Paris Cédex 16 (FR)**

(72) Inventeur : **Yana, Victor Yves**
**98 Chemin des Mourets**
**F-13013 Marseille (FR)**

(74) Mandataire : **Barnay, André François**
**Cabinet Barnay 72, rue d'Hauteville**
**F-75010 Paris (FR)**

Jouve, 18, rue Saint-Denis, 75001 PARIS

## Description

La présente invention est relative à un dispositif de suspension anti-résonnante pour hélicoptère, interposé entre le rotor et le fuselage de l'appareil, pour filtrer les efforts et moments excitateurs en provenance du rotor.

Parmi les différents dispositifs connus de suspension anti-résonnante utilisés actuellement, l'un des plus répandus est celui à trois degrés de liberté présentant les caractéristiques décrites dans FR-2 474 996 et FR-2 499 505 de la demanderesse.

De tels dispositifs s'appliquent à des hélicoptères composés d'un fuselage, d'un ensemble moteur, d'un rotor sustentateur et propulseur et d'une boîte de transmission faisant office de réducteur située entre ledit ensemble moteur et ledit rotor, et alignés sur l'axe de ce dernier. Ils comportent essentiellement un jeu d'au moins trois pièces de soutien dont les extrémités supérieures sont reliées au carter supérieur de la boîte de transmission et dont les extrémités inférieures sont articulées aux extrémités extérieures de bras disposés radialement autour de l'embase de la boîte de transmission, à laquelle ils sont reliés ainsi que dans la région de leurs extrémités extérieures au fuselage en des points forts de celui-ci.

Chaque bras radial comporte une partie déformable, et les diverses liaisons de chaque bras radial sont disposées de telle sorte qu'elles lui permettent des débattements par déformation élastique dans le plan radial passant par l'axe du rotor qui le contient. Le débattement de chaque bras radial imprime des déplacements importants à une masse battante montée à l'extrémité d'un support rigide dont l'autre extrémité est solidaire de l'extrémité du bras axial correspondant.

Lesdits dispositifs de suspension comportent également une platine de suspension, située sensiblement dans un plan perpendiculaire à l'axe du rotor. La partie centrale de la platine de suspension est solidaire du fond de la boîte de transmission alors que sa périphérie est solidarisée à la structure de la partie supérieure du fuselage de l'hélicoptère. Cette platine peut être constituée d'une membrane souple en flexion qui autorise au fond de la boîte
- des mouvements alternés limités de translation verticale (pompage), et/ou
- des mouvements alternés limités d'oscillation (roulis et tangage) autour d'axes situés dans le plan de la membrane.

La membrane est suffisamment rigide dans son plan pour transmettre sans déformation sensible la réaction du couple moteur de l'hélicoptère sur la boîte de transmission et le fuselage.

Cette platine peut également être constituée d'un fléau horizontal dont les extrémités de chacun des bras sont liées à la structure du fuselage par deux bielles articulées travaillant en traction pour transmettre sur la boîte de transmission et le fuselage la réaction du couple moteur de l'hélicoptère tout en autorisant de faibles déplacements verticaux et des oscillations angulaires de la boîte de transmission autour d'axes situés dans le plan de la platine.

Dans ces dispositifs, le mécanisme ressort/masse battante antirésonnante, intercalé entre les extrémités inférieures des pièces de soutien de la boîte de transmission sur le fuselage et les points forts d'attache sur le dessus du fuselage, est disposé horizontalement dans un plan perpendiculaire à l'axe du rotor de telle sorte que les oscillations des masses battantes provoquées par les déformations de la partie flexible des bras ont lieu dans des plans verticaux et que les efforts d'inertie générés sur les supports desdites masses battantes ont donc uniquement une direction verticale.

Bien que ces dispositifs de suspension fonctionnent de façon tout à fait satisfaisante, et qu'il soit possible de trouver aisément des compromis pour, d'une part assurer à travers lesdites suspensions la transmission entre rotor et fuselage des efforts et moments statiques qui sollicitent la tête de rotor de l'hélicoptère, et d'autre part obtenir un filtrage efficace des composantes dynamiques des forces et moments qui affectent ladite tête de rotor et en particulier la composante de la force perpendiculaire au plan du rotor et les excitations en forces et moments dans le plan du rotor, la demanderesse a trouvé qu'il était possible de les perfectionner afin d'en améliorer les performances.

L'invention a en conséquence pour objet à cet effet un dispositif de suspension anti-résonnante, notamment pour hélicoptère. Les hélicoptères auxquels est particulièrement adapté le dispositif de l'inveniton, sont composés :
- d'un fuselage,
- d'un ou plusieurs moteurs,
- d'un rotor sustentateur,
- d'une boîte de transmission formant réducteur transmettant, par un train d'engrenages, la puissance du ou des moteurs au rotor sustentateur, ledit réducteur étant situé entre ledit fuselage et ledit rotor, dont l'axe de rotation est confondu avec l'axe de l'arbre de sortie verticale dudit réducteur,
- d'un ensemble de liaison dudit réducteur audit fuselage au moyen, d'une part, d'un pylône constitué par un jeu d'au moins trois barres obliques rigides disposées autour dudit réducteur suivant des directions concourantes sur l'axe de rotation dudit rotor en un point situé entre le centre de celui-ci et la partie supérieure dudit réducteur, lesdites barres obliques étant fixées par leur extrémité supérieure sur le carter dudit réducteur et par leur extrémité inférieure sur la structure supérieure dudit fuselage et, d'autre part, d'une platine souple disposée entre le fond dudit réducteur et la structure supérieure dudit fuselage autorisant au fond dudit réducteur des mouvements alternés limités de translation verticale et/ou des mouvements alternés limités d'oscillations autour d'axes situés dans le plan de la platine et passant par son centre mais n'autorisant pas au fond dudit réducteur de rotation autour de l'axe rotor. Le dispositif de suspension anti-résonnante dudit réducteur par rapport audit fuselage se caractérise notamment en ce que, autour du carter dudit réducteur sont disposés, en nombre égal au nombre de barres obliques rigides, des organes anti-résonnants monodirectionnels de liaison des extrémités supérieures des barres obliques rigides avec ledit réducteur.

Selon un mode de réalisation de l'invention, ces organes anti-résonnants sont constitués par des bras disposés chacun dans un plan défini par l'axe du rotor et l'axe de la barre oblique correspondante, l'axe longitudinal de chaque bras étant disposé suivant une direction sensiblement parallèle à l'axe du rotor.

Chaque bras est formé par une pièce unique allongée ou un assemblage offrant, d'une part à sa partie inférieure du côté du socle du réducteur sur lequel ledit bras est articulé par son extrémité, une partie flexible dans le plan défini par l'axe du rotor et l'axe de la barre oblique correspondante et, d'autre part à sa partie supérieure, du côté du sommet du réducteur, une partie rigide en un point de laquelle ledit bras est articulé sur la zone supérieure du réducteur, partie rigide dont l'extrémité supérieure est articulée à l'extrémité supérieure de la barre oblique correspondante.

Enfin, la partie rigide de chaque bras au voisinage de son articulation sur la zone supérieure du réducteur est solidarisée avec l'extrémité supérieure d'un levier rigide, disposé de façon sensiblement parallèle au bras dont l'extrémité inférieure porte une masse battante.

Selon une autre caractéristique, l'angle β que forme chaque barre oblique avec le plan perpendiculaire à l'axe du rotor est compris entre 45° et 70°, avec une valeur optimale de 60°, de façon que la raideur des organes anti-résonnants KI qui en résulte soit inférieure à la raideur verticale de l'ensemble suspendu KV, la relation entre KV et KI étant déterminée par l'égalité

$$KI = \frac{KV}{tg\beta}.$$

La description qui va suivre en regard des dessins annexés à titre d'exemples non limitatifs, permettra de bien comprendre comment l'invention peut être mise en pratique.

La figure 1 est une vue schématique partielle en perspective d'un hélicoptère monorotor sur lequel est installé le dispositif de suspension anti-résonnante selon l'invention.

La figure 2 est une vue en élévation d'une variante du dispositif de suspension anti-résonnante de la technique antérieure.

La figure 3 est une vue en élévation d'un dispositif de suspension anti-résonnante suivant l'invention.

La figure 4 est une vue schématique d'un organe anti-résonnant.

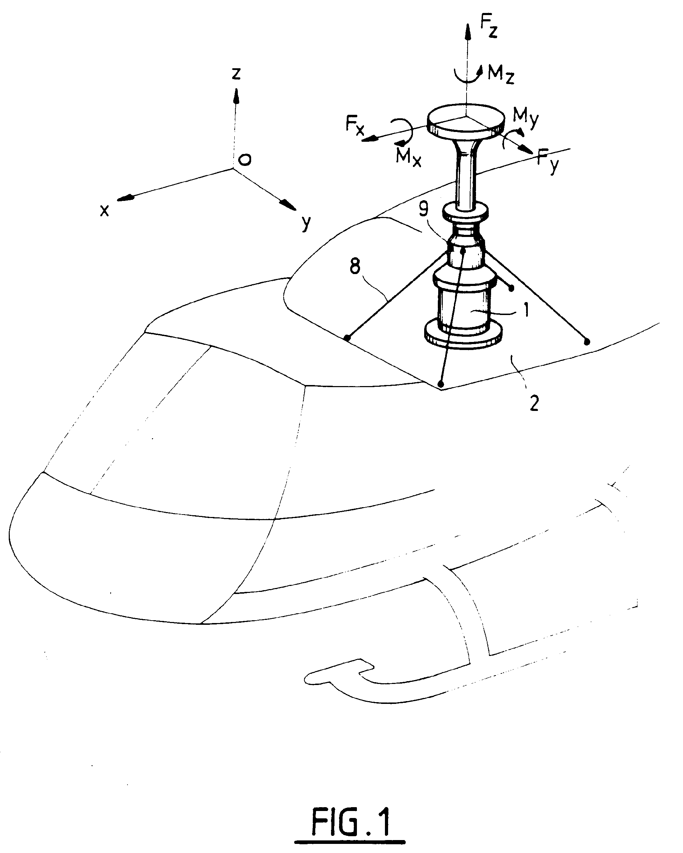

Sur la figure 1, est représenté un hélicoptère monorotor sustentateur sur lequel s'applique l'invention. Elle montre essentiellement l'architecture générale de la liaison sur la structure résistante du fuselage 2 et de la boîte de transmission principale 1 qui est interposée entre le moteur (non représenté) et le moyeu du rotor principal pour l'entraînement en rotation de ce dernier.

Cette liaison est constituée par un pylône de quatre barres rigides obliques 8 qui sont concourantes sur l'axe de sortie de la boîte de transmission principale, chacune de ces barres étant fixée à sa partie supérieure, sur le carter supérieur de la boîte de transmission principale 1 par une articulation 9 et à sa partie inférieure sur un point fort de la structure résistante du fuselage 2.

Le socle de la boîte de transmission principale est solidarisé avec la structure supérieure du fuselage 2 par une liaison ayant une grande rigidité dans le plan de ladite structure supérieure.

Sur la tête de rotor de l'hélicoptère sont représentées schématiquement les résultantes des forces et des moments sur le rotor qui sollicitent le corps du moyeu suivant les directions de référence de l'appareil, c'est-à-dire Ox vers l'avant Oy latéralement et Oz vers le haut perpendiculairement à Ox et Oy.

Ces forces et ces moments sont :
- la force Fz correspondant à la portance du rotor avec une composante dynamique verticale dite de "pompage" qui sollicite le fuselage en vibrations verticales par l'intermédiaire des barres 8,
- le moment Mz correspondant au couple moteur qui s'exerce sur le mât-support de moyeu et qui est équilibré par un couple s'exerçant en sens opposé sur le carter de la boîte de transmission principale 1 et qui est transmis au fuselage par la liaison du fond du carter sur la structure supérieure du fuselage,
- des forces Fx et Fy dans le plan du rotor et dont les composantes dynamiques constituent des excitations vibratoires horizontales du fuselage dites "en tamis" qui sont transmises au fuselage par l'intermédiaire des barres 8 et du fond de la boîte de transmission principale 1,
- des moments Mx et My qui sollicitent la tête de rotor autour des axes coplanaires Ox et Oy et qui tendent à faire basculer le rotor autour d'axes perpendiculaires à l'axe du rotor et passant par le point de convergence des barres obliques 8. Leurs composantes dynamiques sollicitent le fuselage également en tamis par l'intermédiaire du fond de la boîte de transmission 1.

L'architecture générale de liaison de la boîte de transmission au fuselage montrée sur la figure 1 est celle dans laquelle vient s'intégrer le dispositif de suspension anti-résonnante suivant l'invention.

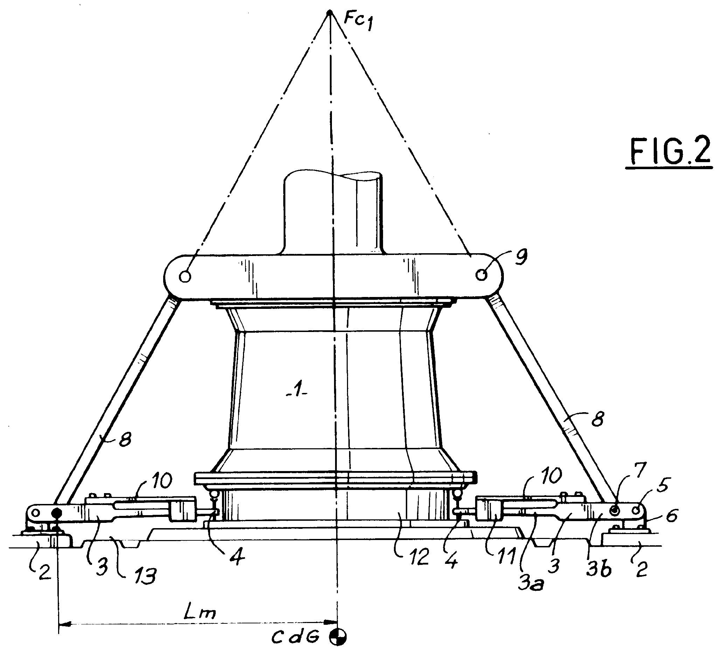

En se référant à la figure 2, dans le dispositif de suspension anti-résonnante représenté, qui offre les caractéristiques des dispositifs décrits dans FR-2 499 505, la boîte de transmission principale 1 dont l'axe est confondu avec l'axe du rotor, est fixée au-dessus du fuselage 2 d'un hélicoptère, suivant cet exemple d'exécution, par un pylône constitué de quatre barres rigides 8 obliques disposées à 90° l'une de l'autre et concourantes sur l'axe du rotor en un point Fc1 de focalisation.

Chaque barre 8 est articulée à son extrémité supérieure par une articulation 9 sur la partie supérieure de la boîte de transmission 1 et à son extrémité inférieure sur un point fort 6 du fuselage 2 par l'intermédiaire d'un bras 3 disposé radialement autour de l'embase de la boîte de transmission 1.

Chaque bras radial est formé par une pièce ou un assemblage offrant d'une part du côté de la boîte de transmission une partie flexible 3a, et d'autre part du côté de l'extrémité inférieure de la barre oblique correspondante 8, une partie rigide 3b en un point de laquelle la barre oblique 8 est articulée par son extrémité inférieure 7.

L'extrémité interne de la partie flexible 3a du bras 3 est articulée sur le socle de la boîte de transmission 1, alors que l'extrémité externe de la partie rigide 3b du bras 3 est articulée sur une ferrure solidarisée avec un point fort 6 du fuselage 2.

Sur la partie rigide 3b du bras 3 au voisinage de l'articulation 7, est fixée sur celui-ci, par boulonnage, l'extrémité d'un support rigide allongé 10 d'axe sensiblement parallèle au bras 3, et portant à son autre extrémité une masse battante 11.

Le fond de la boîte de transmission 1 est lui-même relié au fuselage 2 de l'hélicoptère par une platine 13 constituée par une membrane métallique plane en forme de couronne circulaire disposée perpendiculairement à l'axe de la boîte de transmission et qui est déformable en flexion sous l'action d'effort s'exerçant suivant la direction dudit axe ainsi que sous l'action de moments de basculement induisant des pivotements autour du point d'intersection de l'axe de la boîte de transmission avec le plan de la membrane, laquelle est relativement rigide en traction/compression vis-à-vis d'efforts contenus dans son plan et rigide en cisaillement sous l'action du couple s'exerçant également dans son plan.

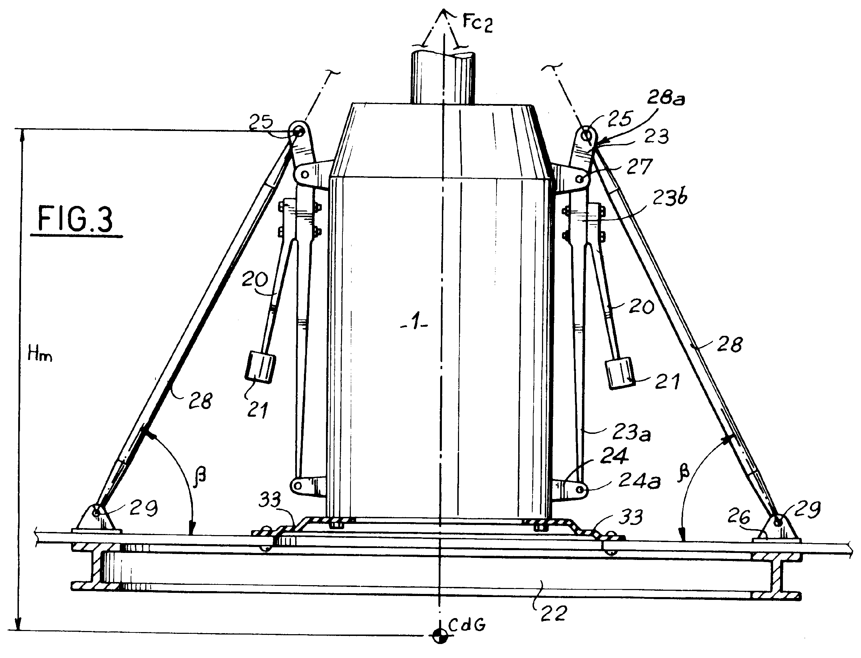

Dans le dispositif suivant l'invention, représenté à la figure 3, la boîte de transmission 1, dont l'axe est confondu avec l'axe du rotor, est fixée au-dessus du fuselage 22 d'un hélicoptère par un pylône constitué de quatre barres rigides obliques 28 disposées à 90° l'une de l'autre, et concourantes sur l'axe du rotor en un point de focalisation Fc2.

Chaque barre 28 est articulée à son extrémité inférieure 29 sur une ferrure 26 solidarisée à un point fort du fuselage 22 et à son extrémité supérieure 28a sur le chapeau de la boîte de transmission 1 par l'intermédiaire d'un bras 23 disposé longitudinalement sur le pourtour du carter de la boîte de transmission 1, sensiblement parallèlement à l'axe de cette boîte.

Chaque bras longitudinal est formé par une pièce unique ou un assemblage offrant d'une part dans sa partie inférieure une zone flexible 23a, et d'autre part du côté de l'extrémité supérieure de la barre oblique correspondante 28, une partie rigide 23b en un point de laquelle le bras est articulé par une articulation 27 sur le chapeau de la boîte de transmission 1.

L'extrémité supérieure rigide 23b du bras 23 est articulée par une articulation 25 sur l'extrémité supérieure 28a de la barre 28, alors que l'extrémité inférieure flexible 23a du bras 23 est articulée par une articulation 24a sur une ferrure 24 solidaire du socle de la boîte de transmission 1.

Sur la partie rigide 23b du bras 23 au voisinage de l'articulation 27, est fixée sur celui-ci par boulonnage, l'extrémité d'un support rigide allongé 20 d'axe sensiblement parallèle au bras 23 et portant à son extrémité une masse battante 21.

Le fond de la boîte de transmission 1 est lui-même relié au fuselage 22 de l'hélicoptère par une platine 33 constituée par une membrane plane, métallique ou en matériau composite stratifié en forme de couronne circulaire disposée perpendiculairement à l'axe de la boîte de transmission et qui est déformable en flexion sous l'action d'efforts s'exerçant suivant la direction dudit axe ainsi que sous l'action de moments de basculement induisant des pivotements autour du point d'intersection de l'axe de la boîte de transmission avec le plan de la membrane, laquelle est relativement rigide en traction/compression vis-à-vis d'efforts contenus dans son plan et rigide en cisaillement sous l'action du couple s'exerçant également dans son plan.

On voit donc que dans le dispositif suivant l'invention, chaque mécanisme ressort/masse battante, ou organe anti-résonnant, est intercalé entre les extrémités supérieures des pièces de soutien de la boîte de transmission sur le fuselage et des points d'attache sur le dessus de la boîte de transmission, un tel organe étant disposé verticalement de façon sensiblement parallèle à l'axe du rotor de telle sorte que les oscillations des masses battantes provoquées par les déformations de la partie flexible des bras ont lieu dans des plans définis par l'axe du rotor et chaque barre oblique, leur direction de fonctionnement étant alors sensiblement horizontale.

Le positionnement axial du bras déformable 23, sensiblement parallèlement à l'axe de la boîte de transmission, et non plus radial comme dans la technique antérieure, entraîne des différences importantes tant pour les aspects de réglage statique de la suspension que pour les propriétés de filtrage des vibrations générées par les différentes composantes des efforts et moments dynamiques en provenance de la tête de rotor, en particulier la composante verticale (effort Fz) et les excitations coplanaires (efforts Fx, Fy et moments Mx et My).

On examine d'abord l'avantage du dispositif selon l'invention comparativement avec le dispositif antérieur en ce qui concerne le réglage statique de l'ensemble de la suspension.

On sait que, en dehors de son rôle de filtrage des efforts et moments dynamiques qui proviennent de la tête de rotor et qui sont transmis entre la boîte de transmission principale et le fuselage, une suspension d'hélicoptère doit également assurer la liaison mécanique entre ladite boîte de transmission et ledit fuselage. Elle est donc sollicitée par les efforts et moments statiques générés par la tête de rotor, dont certains, suivant les différentes configurations de vol sont de niveaux très élevés et peuvent ainsi occasionner des déplacements de la boîte de transmission par rapport au fuselage, qui, en fonction de la raideur de la liaison entre ces deux ensembles, risquent de s'avérer importants et d'entraîner des désalignements inacceptables des liaisons avec des organes entourant la boîte de transmission, en particulier celles des turbomoteurs, avec ladite boîte de transmission.

La limite autorisée pour ces désalignements détermine en fait la raideur de la liaison de la boîte de transmission avec le fuselage qui est réalisée par l'ensemble des barres et du système anti-résonnant.

Le déplacement le plus critique est le déplacement vertical suivant l'axe du rotor, à facteur de charge élevé, par exemple lors d'une manoeuvre de ressources effectuée par l'hélicoptère.

Dans le cas de la technique antérieure, la raideur verticale de l'ensemble (KV) est égale à la raideur (KI) des systèmes anti-résonnants montés entre l'extrémité inférieure des barres et le fuselage.

ON a KV = KI

Dans le cas de la suspension suivant l'invention, la raideur verticale de l'ensemble est égale à la raideur des systèmes anti-résonnants (KI) multipliée par la tangente de l'angle ($\beta$) que font les barres obliques rigides avec le plan perpendiculaire à l'axe du rotor passant par le fond de la boîte de transmission (voir figure 3).

On a ici KV = KI x tg $\beta$.

La raideur verticale de la liaison entre la boîte de transmission et le fuselage étant déterminée par les critères de désalignement cités précédemment, une telle propriété permet, en choisissant judicieusement l'angle $\beta$, de réduire la raideur des systèmes anti-résonnants.

A titre d'exemple, si on prend :
$\beta$ = 60 degrés,
alors : tg 60° = 1,732

Ainsi, la raideur à donner dans ce cas aux systèmes anti-résonnants KI est égale à $\frac{KV}{1,732}$ = 0,58 KV.

On voit donc qu'avec une inclinaison des barres de 60°, la disposition selon l'invention permet de gagner 40% sur la raideur des systèmes anti-résonnants de la technique antérieure.

En pratique, l'angle $\beta$ sera pris entre la valeur minimale de 45° pour laquelle tg$\beta$ = 1 et la valeur maximale de 70° permise par l'architecture générale de la liaison de la boîte de transmission principale avec la structure du fuselage au moyen d'un pylône de barres obliques de façon que le point de convergence des barres se situe en dessous du plan du rotor.

On examine ensuite l'avantage du dispositif selon l'invention, toujours comparativement avec le dispositif antérieur, en ce qui concerne l'efficacité du filtrage des vibrations.

On sait que les performances de filtrage des efforts et moments dynamiques d'une suspension anti-résonnante dépendent :

- de la cinématique de l'ensemble de la fixation de la boîte de transmission et des organes anti-résonnants,
- des caractéristiques dynamiques des systèmes anti-résonnants,
- de la zone d'action des systèmes anti-résonnants.

Ces performances sont évaluées en examinant séparément la force dynamique verticale Fz d'excitation à la tête du rotor, laquelle provoque des vibrations verticales dites de pompage et les composantes coplanaires - efforts Fx et Fy et moments Mx et My - lesquelles génèrent des vibrations horizontales dites de tamis.

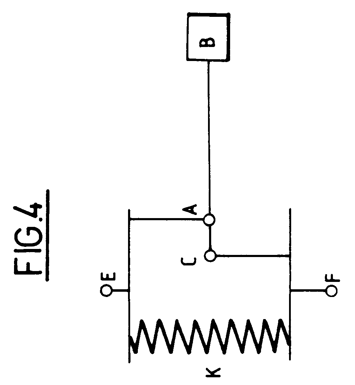

Chaque organe anti-résonnant peut en fait être considéré comme constitué des éléments schématiques montrés sur la figure 4.

Entre les deux interfaces (E et F, E représentant l'élément excitateur et F le point fort d'attache sur le fuselage) sont montés en parallèle : un ressort de raideur K et un pendule dont la masse concentrée en son extrémité est la masse battante "Mb". Le pendule est monté comme un levier articulé de telle sorte que l'effort d'inertie qu'il génère au niveau des extrémités est amplifié dans le rapport des bras de levier.

Si on appelle $\lambda$ le rapport CB/CA de la distance CB entre la masse battante B et l'articulation la plus éloignée C à la distance CA entre les deux articulations C et A et b$\Omega$ la pulsation d'excitation (b étant un nombre entier et $\Omega$ la vitesse de rotation du rotor), la raideur d'un tel système anti-résonnant est donnée par :

$$K = Mb \; (\lambda) \; (\lambda - 1) \; (b\Omega)^2$$

On peut remarquer que dans cette équation, la masse battante Mb est, à peu de choses près, inversement proportionnelle au carré de λ, ce qui montre que l'on a intérêt à avoir un rapport λ le plus grand possible pour réduire la masse battante.

Ainsi donc, dans les dispositifs de suspension anti-résonnante de la technique antérieure, la raideur verticale KV de l'ensemble de la suspension, qui est égale à la somme des raideurs statiques des systèmes anti-résonnants disposés entre chaque extrémité inférieure des barres 8 et le fuselage, doit, comme on l'a vu précédemment, avoir une valeur élevée et impose en conséquence des valeurs importantes pour le rapport (donc pour la longueur des leviers 10) et pour les masses battantes 11.

Dans une suspension anti-résonnante suivant l'invention, la raideur verticale de la suspension KV déterminée par une raideur statique plus faible, puisqu'égale, comme on l'a vu, à KI x tgβ , permet toutes choses égales par ailleurs, de diminuer de façon sensible la masse battante nécessaire pour une efficacité donnée du dispositif.

On peut donc dans le dispositif suivant l'invention, adopter avantageusement pour le filtrage de l'excitation verticale Fz, le réglage nominal des organes anti-résonnants déterminé pour transmettre les efforts verticaux statiques.

En ce qui concerne le filtrage des excitations coplanaires en Fx, Fy, Mx et My, il faut prévoir, par rapport au réglage nominal des organes anti-résonnants, une augmentation de la masse battante.

Cette augmentation de masse est proportionnelle :
- à la distance horizontale entre l'axe rotor et la liaison du batteur au fuselage (Lm) dans le cas des dispositifs antérieurs (voir figure 2); ou
- à la distance verticale entre le centre de gravité du fuselage et la liaison du bras 23 à la barre 28 (Hm) dans le cas du dispositif de la présente invention (voir figure 3).

En pratique, on peut estimer que Hm : 2 Lm. On a donc, toutes choses égales par ailleurs, une efficacité sensiblement doublée du dispositif selon l'invention par rapport aux dispositifs antérieurs.

En résumé, les importants avantages du dispositif selon l'invention par rapport aux dispositifs antérieurs sont les suivants :
- Amélioration sensible des performances de filtrage des excitations dynamiques en Fz, Fx, Mx et My.
- Diminution significative de la masse totale de la suspension essentiellement en raison de la réduction des masses battantes.
- Réduction des efforts statiques dans les bras souples.
- Tolérance plus grande aux facteurs de charge élevés, ce qui est un avantage particulièrement intéressant pour les hélicoptères militaires, susceptibles d'effectuer des manoeuvres de caractère acrobatique.
- Enfin, implantation plus facile des systèmes anti-résonnants entre les barres obliques et le carter de la boîte de transmission principale en des zones généralement inoccupées par les organes de transmission, les commandes de vol et les équipements annexes entraînés par la boîte de transmission.

## Revendications

1. Dispositif de suspension anti-résonnante, notamment pour un hélicoptère composé :
   - d'un fuselage,
   - d'un ou plusieurs moteurs,
   - d'un rotor sustentateur,
   - d'une boîte de transmission (1) formant réducteur transmettant, par un train d'engrenage, la puissance du ou des moteurs au rotor sustentateur, ledit réducteur étant situé entre ledit fuselage et ledit rotor, dont l'axe de rotation est confondu avec l'axe de l'arbre de sortie verticale dudit réducteur,
   - d'un ensemble de liaison dudit réducteur audit fuselage au moyen, d'une part, d'un pylône constitué par un jeu d'au moins trois barres obliques rigides (28) disposées autour dudit réducteur (1) suivant des directions concourantes sur l'axe de rotation dudit rotor en un point situé entre le centre de celui-ci et la partie supérieure dudit réducteur, lesdites barres obliques étant fixées par leur extrémité supérieure (25) sur le carter dudit réducteur et par leur extrémité inférieure (29) sur la structure supérieure (22) dudit fuselage et, d'autre part, d'une platine souple (33) disposée entre le fond dudit réducteur et la structure supérieure (22) dudit fuselage autorisant au fond dudit réducteur (1) des mouvements alternés limités de translation verticale et/ou des mouvements alternés limités d'oscillations autour d'axes situés dans le plan de la platine (33) et passant par son centre, mais n'autorisant pas au fond dudit réducteur (1) de rotation autour de l'axe du rotor, le dispositif de suspension anti-résonnante dudit réducteur par rapport audit fuselage étant caractérisé en ce que, autour du carter dudit réducteur (1), sont disposés, en position verticale et en nombre égal au nombre de barres obliques rigides, des organes anti-résonnants monodirectionnels à masses battantes (20, 21, 23, 23a, 23b, 25) à la liaison des extrémités supérieures des barres obliques rigides (28) avec ledit réducteur (1).

2. Dispositif de suspension selon la revendication 1, caractérisé en ce que chaque organe anti-résonnant à masse battante comporte au moins un bras (23a) disposé dans un plan défini par l'axe du rotor et l'axe de la barre oblique correspondante, l'axe longitudinal de chaque bras étant disposé suivant une direction sensiblement parallèle à l'axe du rotor, en ce que chaque bras est formé par une pièce unique allongée (23a) ou un assemblage offrant, d'une part à sa partie inférieure du côté du socle du réducteur sur lequel ledit bras est articulé par son extrémité, une partie flexible dans le plan défini par l'axe du rotor et l'axe de la barre oblique correspondante et, d'autre part à sa partie supérieure, du côté du sommet du réducteur, une partie rigide en un point de laquelle ledit bras est articulé sur la zone supérieure du réducteur, partie rigide dont l'extrémité supérieure est articulée à l'extrémité supérieure de la barre oblique correspondante et en ce que la partie rigide de chaque bras (23a) au voisinage de son articulation (23b) sur la zone supérieure du réducteur est solidarisée avec l'extrémité supérieure d'un levier rigide (20), disposé de façon sensiblement parallèle au bras dont l'extrémité inférieure porte une masse battante (21).

3. Dispositif de suspension selon l'une des revendications 1 ou 2, caractérisé en ce que l'angle β que forme chaque barre oblique (28) avec le plan perpendiculaire à l'axe du rotor est compris entre 45° et 70°, avec une valeur optimale de 60°, de façon que la raideur des organes anti-résonnants KI qui en résulte soit inférieure à la raideur verticale de l'ensemble suspendu KV, la relation entre KV et KI étant déterminée par l'égalité $KI = \dfrac{KV}{tg\,\beta}$.

**Patentansprüche**

1. Antiresonante Aufhängevorrichtung, speziell für Hubschrauber bestehend aus:
   - Rumpfwerk,
   - einem oder mehreren Motoren,
   - Auftriebsrotor,
   - Getriebe (1), ausgebildet als Untersetzungsgetriebe zur Übertragung der Leistung des oder der Motoren über einen Getriebezug auf den Auftriebsrotor, wobei das Untersetzungsgetriebe zwischen Rumpfwerk und Rotor, dessen Drehachse mit der Achse der vertikalen Abtriebswelle des Untersetzungsgetriebes konvergent ist, angeordnet ist,
   - Konstruktion zur Verbindung des Untersetzungsgetriebes mit dem Rumpfwerk durch einerseits einen Mast, der aus einem Satz mit mindestens drei starren Schrägstangen (28) besteht, die um das Untersetzungsgetriebe (1) in Richtungen angeordnet sind, die auf der Drehachse des Rotors in einem Punkt zusammenlaufen, der zwischen der Mitte desselben und dem Oberteil des Untersetzungsgetriebes liegt, wobei die Schrägstangen mit ihrem oberen Ende (25) am Gehäuse des Getriebes, und mit ihrem unteren Ende (29) am oberen Gerippe (22) des Rumpfwerks befestigt sind, und andererseits durch eine elastische Platte (33), die zwischen dem Boden des Untersetzungsgetriebes und dem oberen Gerippe (22) des Rumpfwerks angeordnet ist, und dem Boden des Untersetzungsgetriebes (1) die Ausführung von alternierenden, begrenzten Vertikaltranslationsbewegungen und/oder alternierenden, begrenzten Schwingbewegungen um die Achsen, die in der Ebene der Platte (33) liegen und durch deren Mitte hindurchgehen, ermöglicht, jedoch die Drehung des Bodens des Untersetzungsgetriebes (1) um die Rotorachse verhindert, wobei die im Verhältnis zum Rumpfwerk antiresonante Aufhängevorrichtung des Untersetzungsgetriebes **dadurch gekennzeichnet** ist, daß um das Gehäuse des Untersetzungsgetriebes (1) antiresonante Bauteile in gleicher Richtung wie die Schlagmassen (20, 21, 23, 23a, 23b, 25) in vertikaler Position in einer der Anzahl der starren Schrägstangen entsprechenden Anzahl auf der Verbindung der oberen Enden der unelastischen Schrägstangen (28) mit dem Untersetzungsgetriebe (1) angeordnet sind.

2. Aufhängevorrichtung nach Anspruch 1, **dadurch gekennzeichnet**, daß jedes antiresonante Bauteil an der Schlagmasse mindestens einen Arm (23a) enthält, der in einer Ebene angeordnet ist, die von der Rotorachse und der Achse der entsprechenden Schrägstange definiert wird, wobei die Längsachse eines jeden Arms in einer deutlich zur Rotorachse parallelen Richtung angeordnet ist, und dadurch, daß jeder Arm aus einem verlängerten Einzelteil (23a) oder einer Konstruktion gebildet wird, die einerseits an ihrem unteren Teil auf der Seite der Grundplatte des Untersetzungsgetriebes, mit welcher der Arm über sein Ende gelenkig verbunden ist, einen elastischen Teil in der Ebene, die von der Rotorachse und der Achse der entsprechenden Schrägseite definiert wird, und andererseits an ihrem oberen Teil auf der Oberseite des Untersetzungsgetriebes an einem Punkt, an dem der Arm mit dem oberen Bereich des Untersetzungsgetriebes gelenkig verbunden ist, einen starren Teil, dessen oberes Ende mit dem oberen Ende der entsprechenden Schrängstange gelenkig verbunden ist, aufweisen, und **dadurch gekennzeichnet**, daß der starre Teil eines jeden Arms (23a) neben seinem Gelenk (23b) auf dem oberen Bereich des Untersetzungsgetriebes mit dem oberen Ende eines starren Hebels (20), der deutlich parallel zu dem Arm, dessen unteres Ende eine Schlagmasse (21) mitträgt, kraftschlüssig verbunden ist.

3. Vorrichtung nach Anspruch 1 oder 2, **dadurch gekennzeichnet**, daß der Winkel β, der von jeder Schrägstange mit der zur Rotorachse senkrechten Ebenen gebildet wird, zwischen 45° und 70°, mit einem Optimalwert von 60°, liegt, so daß die daraus resultierende Steifigkeit der antiresonanten Bauteile KI geringer ist als die vertikale Steifigkeit der aufgehängten Konstruktion KV, wobei das Verhältnis zwischen KV und KI mit der Gleichung

$$KI = \frac{KV}{tg\ \beta}$$

ermittelt wird.

## Claims

1. An anti-resonance suspension system notably for a helicopter comprising:
   - a fuselage,
   - one or more motors,
   - a lift rotor,
   - a reduction gearbox (1) which transmits, through a gear train, the power of the motor or motors to the lift rotor, the said gearbox being position between the said fuselage and the said rotor, the rotational axis of which is aligned with the vertical axis of the output shaft of the said gearbox,
   - a linkage assembly linking the said gearbox to the said fuselage by means of, firstly, a support structure or mast comprising at least three oblique rigid bars (28) capable of providing a working motion when in use positioned around the said gearbox (1) and orientated in directions which converge on the axis of rotation of the said rotor at a point positioned between the centre of this and the upper part of the said gearbox, the said oblique bars being connected at their upper end (25) to the casing of the said gearbox and at their lower end (29) to the upper structure (22) of the said fuselage and, secondly, a flexible plate (33) positioned between the base of the said gearbox and the upper structure (22) of the said fuselage which allows the base of the said gearbox (1) to make limited alternating vertical movements of translation and/or limited alternating oscillatory movements about axes lying in the plane of the plate (33) and passing through its centre, but not allowing the base of the said gearbox (1) rotational movement about the axis of the rotor, the anti-resonance suspension unit of the said gearbox with respect to the said fuselage being characterised in that mono-directional anti-resonance vibrating mass components (20, 21, 23, 23a, 23b, 25) are arranged vertically around the casing of the said gearbox (1) in an equal number to the number of oblique rigid bars at the connection of the upper ends of the oblique rigid bars (28) with the said gearbox.

2. A suspension unit according to claim 1, characterised in that each vibrating mass anti-resonance component comprises at least one arm (23a) arranged in a plane defined by the axis of the rotor and the axis of the corresponding oblique bar, the longitudinal axis of each arm lying substantially parallel to the axis of the rotor, each arm being formed from an integral length (23a) or an assembly having, firstly, at its lower end towards the base of the gearbox on which the said arm is movable mounted at its end, a flexible part lying in a plane defined by the axis of the rotor and the axis of the corresponding oblique bar and, secondly, at its upper part, towards the top of the gearbox, a rigid part at one point of which the said arm is movably mounted to the upper zone of the gearbox, the upper end of the rigid part being movably mounted to the upper end of the corresponding oblique bar and the rigid part of each arm (23a) being attached at a point near its connection to the upper zone of the gearbox to the upper end of a rigid lever (20) arranged substantially parallel to the arm whose end carries a vibrating mass (21).

3. A suspension unit according to claim 1 or claim 2, characterised in that the angle β subtended by each oblique bar (28) with the plane perpendicular to the axis of the rotor lies between 45° and 70°, with an optimal value of 60°, such that the resulting stiffness KI of the anti-resonance components is less than the vertical stiffness KV of the suspended unit, the relationship between KV and KI being determined by the equation

$$KI = \frac{KV}{tan\ \beta}$$

FIG.1

FIG.2

FIG.3

EP 0 488 845 B1

## FIG.4